# EUROPEAN PATENT SPECIFICATION

(11) **EP 0 819 706 B1**
(45) Date of publication and mention of the grant of the patent: **19.11.2003**
(21) Application number: 96111719.9
(22) Date of filing: 19.07.1996
(51) Int. Cl.: C08F 10/00, C08F 4/602

(54) **Process for the syndiotactic propagation of olefins**
Verfahren für syndiotaktische Olefinausbreitung
Procédé pour la propagation syndiotactique des oléfines

(43) Date of publication of application: 21.01.1998
(73) Proprietor: FINA TECHNOLOGY, INC., Houston, Texas 77267-4412 (US)
(72) Inventor: Shamshoum, Edwar S., Houston, Texas 77062 (US); Bauch, Christopher G., Seabrook, Texas 77586 (US); Reddy, B.R., Baytown, Texas 77520 (US); Rauscher, Davis J., Angleton, Texas 77515 (US); McGovern, Kevin P., Friendswood, Texas 77546 (US)
(74) Representative: Detrait, Jean-Claude

(56) References cited:
- EP-A- 0 279 153
- EP-A- 0 439 964
- EP-A- 0 526 955
- EP-A- 0 563 834
- EP-A- 0 619 325
- EP-A- 0 633 272
- EP-A- 0 668 295
- EP-A- 0 704 461

## Description

### BACKGROUND OF THE INVENTION

FIELD OF THE INVENTION: This invention relates to a catalyst and process for polymerization of olefins. A supported metallocene catalyst is made by treating a support with an alumoxane co-catalyst and complexing a metallocene with the alumoxane. The supported metallocene catalyst is suspended in a diluent. Prior to the introduction into a polymerization reaction zone, the supported metallocene catalyst is contacted with an aluminum alkyl co-catalyst.

DESCRIPTION OF THE PRIOR ART: Catalysts for the syndiotactic polymerization of olefins are known in the art and have been known at least since U.S. Patent No. 3,305,538, which described use of a catalyst to produce small quantities of syndiotactic polypropylene which were extracted. Since that time, patents have issued relating to organometallic or metallocene catalysts which produce syndiotactic polyolefins. Examples of these patents include U.S. Patent Nos. 4,892,851; 5,132,381; 5,187,250; 5,219,968 and 5,225,507, the disclosures of which, together with the disclosure of U.S. Patent No. 3,305,538, are hereby incorporated by reference.

These patents disclose metallocene catalysts that are basically a complex derived from a cyclopentadiene, i.e., a metal derivative of cyclopentadiene, which has been ionized by an ionizing agent to form an active cationic metallocene catalyst. It has also become known in the art that metallocenes may be supported on an inert non-reactive material.

In the U.S. Patent No. 4,701,432 a support is treated with at least one metallocene and at least one non-metallocene transition metal compound. To form a catalyst system a co-catalyst comprising an alumoxane and an organometallic compound of Group IA, IIA, IIB and IIIA is added to the supported metallocene/non-metallocene. The support is a porous solid such as talc or inorganic oxides or resinous materials, preferably an inorganic oxide, such as silica, alumina, silica-alumina, magnesia, titania or zirconia, in finely divided form. By depositing the soluble metallocene on the support material it is converted to a heterogeneous supported catalyst. The transition metal compound, such as TiCl₄, is contacted with the support material prior to, after, simultaneously with or separately from contacting the metallocene with the support.

In U.S. Patent No. 4,897,455 a metallocene and an alumoxane were reacted in the presence of a support material to provide a supported metallocene-alumoxane reaction product as a catalyst to polymerize olefins, preferably ethylene. The support is a porous solid, such as talc, inorganic oxides and resinous support materials, such as a polyolefin, and is preferably silica, alumina, silica-alumina and mixtures thereof.

In U.S. Patent No. 4,935,397 a silica gel having a particle size less than 10 microns containing from about 5 to about 20 per cent by weight absorbed water as a catalyst support material. The silica gel is coated with alumoxane and a metallocene is complexed with the alumoxane to form a catalyst which can be used in high pressure and/or high temperature olefin polymerization.

In U.S. Patent No. 5,200,379 pentadienyl derivatives were complexed with transition metals to form a catalyst which is supported on activated inorganic refractory compounds, preferably inorganic oxides and metal phosphates, such as silica and alumina. The inorganic refractory compounds are activated by calcining in air at elevated temperatures and then contacted with a pentadienyl derivative - transition metal complex, such as bis(2,4-dimethylpentadienyl)titanium. The supported catalyst can be used in olefin, preferably ethylene, polymerization.

In U.S. Patent No. 5,240,894 a metallocene is activated with methylalumoxane (MAO) to form a reaction product which is contacted with dehydrated silica. After drying, a supported catalyst is formed which can be used in polymerization of olefins, particularly propylene, a trialkylaluminum co-catalyst or scavenger can be used in polymerization to minimize fouling and increase catalyst activity.

### SUMMARY OF THE INVENTION

The invention provides a process for syndiotactic propagation in the polymerization of olefins, particularly propylene. In one embodiment, the invention comprises forming a suspension of the supported metallocene catalyst in an inert liquid carrier, such as mineral oil, contacting the supported metallocene catalyst with a trialkylaluminum, such as tri-isobutyl aluminum, co-catalyst and introducing the catalyst into a polymerization reaction zone which contains a monomer solution. A preferred embodiment includes forming a supported metallocene catalyst on an inert, non-reactive support, such as silica.

In another embodiment, the invention comprises prepolymerizing the catalyst with the co-catalyst and an olefin. The olefin is added after the catalyst has contacted the co-catalyst. The catalyst is then introduced into the reaction zone. It is preferred to have a stream of olefin contact the catalyst and co-catalyst and carry the catalyst into the reaction zone.

In another embodiment of the invention, the catalyst is contacted with the co-catalyst, for a certain period of time. The catalyst and co-catalyst are suspended in an inert liquid carrier, such as mineral oil. The catalyst is then contacted with an olefin prior to introducing the catalyst into the reaction zone.

In the pre-polymerization step, the catalyst may be coated with a polymer product such that the weight ratio of polymer/catalyst is approximately 0.01-3.0. Preferably, the ratio of coating the catalyst is greater than 1.0 and, more preferably, 2.0-3.0. The preferred olefin is propylene.

The preferred catalyst comprises a metallocene compound of the general formula:

R''_{b}(CpR_{5-b}) CpR'_{5-b})MR*ᵥ₋₂

where R" is a bridge imparting stereorigidity to the structure to the metallocene by connecting the two cyclopentadienyl rings, b is 1 or 0 indicating whether the bridge is present or not, Cp is a cyclopentadienyl ring, R and R' are substituents on the cyclopentadienyl rings and can be a hydride or a hydrocarbyl from 1-9 carbon atoms, each R and R' being the same or different, each (CpR_{5-b}) and (CpR'_{5-b}) being different so that bilateral symmetry exists, M is a Group IIIB, IVB, VB or VIB metal, R* is a hydride, a halogen or a hydrocarbyl from 1-20 carbon atoms, v is the valence of M. The preferred co-catalyst is an alkylaluminum compound, and most preferably tri-isobutyl aluminum.

### BRIEF DESCRIPTION OF THE DRAWINGS

A more complete appreciation of the invention and many of the attendant advantages thereof will be readily understood by reference to the following detailed description when considered in connection with the accompanying drawing wherein:

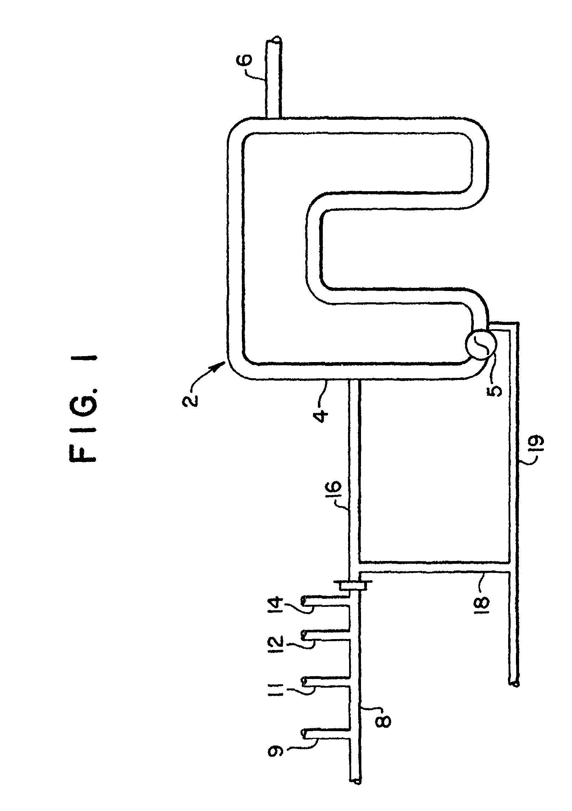

Figure 1 is a schematic illustration of the invention as used in supplying a prepolymerized catalyst system to a continuous flow reactor used for the polymerization of propylene in the liquid phase.

### DETAILED DESCRIPTION OF THE INVENTION

The present invention provides a process for syndiotactic propagation in the polymerization of α-olefins. The invention is particularly adapted for the polymerization of propylene. The invention includes contacting the supported metallocene catalyst with an aluminum alkyl co-catalyst and then prepolymerizing prior to introducing the catalyst into a polymerization reaction zone. Another embodiment of the invention includes contacting the catalyst with the co-catalyst for a certain period of time (aging). Test results show an increase in efficiency of the catalyst of up to 6250 gms polymer product/gm catalyst in one hour when it is aged with the co-catalyst as taught by the present invention. In a preferred embodiment, the aged catalyst is prepolymerized prior to being introduced into the reaction zone.

The type of catalyst contemplated for use in the present invention is generally a metallocene catalyst. These catalysts can be generally defined as a cyclopentadienide, i.e., a metal derivative of cyclopentadiene, which has been ionized to form an active cationic metallocene catalyst. The metallocene compound generally contains two cyclopentadienyl rings and is of the general formula:

R''_{b}(CpR_{5-b}) (CpR'_{5-b})MR*ᵥ₋₂

where R" is a bridge imparting stereorigidity to the structure to the metallocene by connecting the two cyclopentadienyl rings, b is 1 or 0 indicating whether the bridge is present or not, Cp is a cyclopentadienyl ring, R and R' are substituents on the cyclopentadienyl rings and can be a hydride or a hydrocarbyl from 1-9 carbon atoms, each R and R' being the same or different, each (CpR_{5-b}) and (CpR'_{5-b}) being different so that bilateral symmetry exists, M is a Group IIIB, IVB, VB or VIB metal, R* is a hydride, a halogen or a hydrocarbyl from 1-20 carbon atoms, v is the valence of M. Preferably the bridge R" is present and is a hydrocarbyl biradical of 1-20 carbon atoms. Hydrocarbyl radicals useful as the bridge in the present catalysts include linear alkyl radicals of 1-10 carbon atoms or branched alkyl radicals of 1-20 carbon atoms, preferably one carbon atom, which may be substituted or unsubstituted, preferably substituted. The bridge is most preferably diphenylmethyl. (CpR_{5-b}) is preferably an unsubstituted cyclopentadienyl ring. (CpR'_{5-b})is preferably a substituted cyclopentadienyl ring, more preferably a cyclopentadienyl ring substituted such that the substituents are radicals bonded to adjacent carbon atoms to form a fused ring, most preferably (CpR'_{5-b}) is fluorenyl. Preferably, M is a Group IVB metal, more preferably, titanium, zirconium or hafnium. R* is preferably a halogen or an alkyl, more preferably, chlorine or methyl.

Bilateral symmetry is defined as the condition in which there are no substituents or one or more substituents on one side and no substituents or one or more substituents on the other side in the same relative position such that a mirror image is formed from one side to another. One example of such a compound is isopropyl (cyclopentadienyl-9-fluorenyl)zirconium dichloride, abbreviated iPr(Cp) (Flu) ZrCl₂. An illustration of the ligands of this compound are shown below: 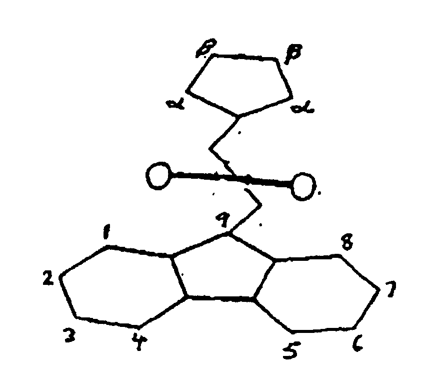 Bilateral symmetry is illustrated by a plane bisecting the zirconium metal and the bridge resulting in the right side of each ligand being a mirror image of its left side. The α and β position of the cyclopentadienyl ring represent the position of possible substituents in the proximal and distal position, respectively, or positions 2/5 and 3/4 of the drawing below: 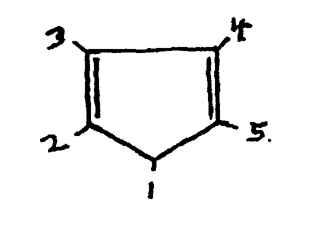 It is believed that bilateral symmetry must exist for the β substituents of the cyclopentadienyl ring but is of less importance and may not be necessary for the α substituents of the cyclopentadienyl ring. It is further believed that bilateral symmetry of substituents of the fluorenyl ring is of less importance and may not be necessary. It is believed that bilateral symmetry of less importance and may not be necessary for the bridge.

The alumoxanes useful in combination with the metallocene compound of the present invention may be represented by the general formula (R-Al-O-)ₙ in the cyclic form and R(R-Al-O-)ₙALR₂ in the linear form wherein R is an alkyl group with one to five carbon atoms and n is an integer from 1 to about 20. Most preferably, R is a methyl group and the preferred alumoxane is methylalumoxane (MAO). The alumoxanes can be represented structurally as follows:

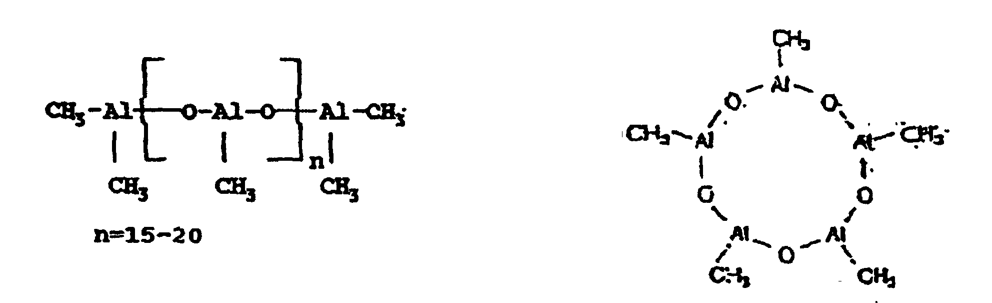

The support was silica having high surface area and small average pore size. One example of silica operative in this invention is chromatography grade silica. The silica was treated with methylalumoxane (MAO) in the following manner: The silica had water removed to a level of approximately 1.0%. The dried silica was slurried in a nonpolar solvent. A solution of alumoxane in solvent was added to the silica slurry. After heating and subsequently cooling the slurry, the solid (silica treated with alumoxane) was separated out and (optionally) dried.

The metallocene was contacted with the MAO-treated silica to form a supported metallocene catalyst in the following manner: A solution of metallocene in a nonpolar solvent was added to a slurry of silica treated with alumoxane also in a nonpolar solvent, preferably the same solvent as the metallocene solution. The solid, metallocene supported on silica treated with alumoxane, was separated out and dried.

A suspension was formed with the supported metallocene catalyst in an inert liquid carrier, such as mineral oil. The liquid carrier is selected based on the following properties:
1. The liquid does not dissolve the solid catalyst component.
2. The liquid has minimal chemical interaction with the catalyst component.
3. The liquid is preferably an inert hydrocarbon.
4. The liquid only "wets" the catalyst component
5. The liquid has sufficient viscosity to maintain the catalyst component in suspension without excessive agitation.
Liquids which would be effective in this invention would be long chain hydrocarbons, such as mineral oil and polyisobutylene. This listing is not intended to be complete and all inclusive but is merely made to show examples of useful liquid media.

A co-catalyst is utilized to aid in the activation of the catalyst for the polymerization reaction. The most commonly used co-catalyst is an organoaluminum compound which is usually an alkyl aluminum. The aluminum alkyl is of the general formula AlR'₃ where R' is an alkyl of from 1-8 carbon atoms or a halogen and R' may be the same or different with at least one R¹ being an alkyl. Examples of aluminum alkyls are trialkyl aluminums, such as trimethyl aluminum (TMA), triethyl aluminum (TEAl) and triisobutyl aluminum (TiBAl). The organoaluminum may also be a dialkylaluminum halide, such as diethyl aluminum chloride (DEAC), or an alkylaluminum dihalide. The preferred co-catalyst is an aluminum trialkyl, specifically triisobutyl aluminum ("TIBAl").

In order to increase the efficiency of the catalyst, the catalyst is pre-polymerized. Basically, the pre-polymerization reaction occurs as a monomer is introduced into a mixture of catalyst and co-catalyst. The monomer is polymerized, and in so doing, it adheres to the surface of the catalyst and forms a coating. Any known method for prepolymerizing a catalyst can be used for the catalyst of the present invention.

In pre-polymerizing the catalyst, a weight ratio of polymer/catalyst of approximately 0.01-3.0 is desirable. Preferably, the weight ratio of polymer to catalyst is greater than 1.0. The preferred range of polymer coating to catalyst is approximately 2.0-3.0.

According to one embodiment of the invention, the supported metallocene catalyst is contacted with a co-catalyst and then is prepolymerized by contact with the monomer prior to being introduced into a polymerization reaction zone which contains additional monomer. In a preferred embodiment, the contact of the catalyst with the co-catalyst occurs in a holding tank in which the catalyst/co-catalyst mixture is allowed to age for 1 hour to 720 hours (30 days), preferably 18 to 48 hours and more preferably 12 to 24 hours. The catalyst/co-catalyst mixture may be fed into the reactor in a continuous or periodic manner.

The contact of the catalyst/co-catalyst mixture with the monomer for prepolymerization can take place in a pipe which carries the catalyst into the polymerization zone. The contact time or residence time of the catalyst in the pipe need be only a few seconds. A minimum of three seconds of pre-contact between the catalyst/co-catalyst and the monomer is sufficient to significantly increase the efficiency of the catalyst. The concentration of co-catalyst in the stream may be varied as the co-catalyst is transferred into the polymerization reaction zone. A preferred concentration would be less than 10% co-catalyst. All of the co-catalyst necessary for the polymerization reaction in the reaction zone need not be fed through this contact pipe. A portion of the desired amount of co-catalyst in the reactor may be added directly to the reaction zone.

It was found that there was a relationship between aging the catalyst in aluminum alkyl and prepolymerization in so far as obtaining polymer product with desirable morphology. The morphology of the polymer product is a function of the particle size, particle shape and the particle size distribution of the catalyst particles. In most processing applications it is desirable for the polymer to have morphology in which the particle are granular rather than agglomerated. To obtain these granular particles it was found that the aging time of the catalyst in aluminum alkyl could be decreased or eliminated if the prepolymerization time was increased and, conversely, the prepolymerization could be decreased (but not eliminated) as the aging time increased. In addition, it was found that the amount of aluminum alkyl used in aging the catalyst affected polymer morphology. As the relative amount of aluminum alkyl was increased for the same aging time period, the morphology improved.

The invention having been generally described, the following examples are given as particular embodiments of the invention and to demonstrate the practice and advantages thereof. It is understood that the examples are given by way of illustration and are not intended to limit the specification or the claims to follow in any manner.

### Preparation of the Metallocene

A manipulations were carried out under argon using standard Schlenk techniques unless otherwise noted.

### Ph₂C(Flu-Cp)⁴:

To a solution of 50g fluorene in 200ml anhydrous tetrahydrofuran at room temperature was added dropwise at 0°C, 207 ml of a 1.6 molar solution of n-butyllithium in hexane (Fig.4). The reaction mixture was stirred for 1 hr at room temperature and cooled to -78°C upon which light brown solid precipitated. 69.3 g of diphenylfulvene was then added to the reaction mixture. The heterogeneous mixture was allowed to gradually come to room temperature with constant stirring and was stirred at room temperature overnight (-18 hrs). The reaction mixture was cooled to 0°C and cautiously quenched with dilute hydrochloric acid (10 to 18%) (slightly exothermic). The mixture was stirred at 0°C for 5 minutes and diluted with 300 ml water and 200ml hexane and filtered through a medium frit funnel. The resulting solid was washed with water (500 ml) followed by hexane (300 ml). The resulting wet solid was air dried followed by drying under vacuum with slight warming. To completely remove entrapped solvent the sample was heated at 100°C under high vacuum overnight. The yield of THF- and water-free ligand was in the range 70-80%.

### Ph₂C(Flu-Cp)ZrCl₂;

A three-necked 3L flask equipped with mechanical stirrer and pressure equalized addition funnel (Fig.4) was charged with 73.2 g of rigorously dried ligand obtained from the previous method (It should be noted that, the ligand must be dry but not necessarily free of THF. In case, THF-free ligand is used, it appears that it may be advantageous to use excess of n-butyllithium to complete dianion formation). One liter of anhydrous ether was added and the stirring initiated. The slurry was cooled to 0°C, and 254.2 ml of 1.6 molar n-butylithium in hexane was added dropwise cautiously. The temperature of the reaction mixture was gradually allowed to come to room temperature and stirred overnight (∼18h). The stirring was stopped and the solid was allowed to settle. The supernatant was decanted. The resulting solid was washed with two portions of anhydrous hexane (2 x 500 ml). A fresh batch of 1.0 L of anhydrous hexane was added and the stirring was initiated. The reaction mixture was cooled to 0°C and 42 g of ZrCl₄ was added in small portions. The temperature was allowed to come to room temperature and stirred overnight (18h). The stirring was stopped and the solid allowed to settle. The supernatant was decanted and the solid dried under vacuum. Total weight, 112 g (contains LiCl).

### Purification Method

112 g of the crude product was added to a 3L, 3 neck-flask and 2 L amylene-free chloroform (amylene present as a preservative in chloroform was removed either by purging with argon for 20 min or by removal under vacuum for a few minutes followed by release of vacuum with argon and repetition of the process 3-4 times) was added. The mixture was magnetically stirred at room temperature for 45 min; the stirring stopped and the flask was placed in a warm water bath. The solid suspension was allowed to settle. Using a cannula, the supernatant was filtered through a fritted funnel packed (2/3 full) with glasswool (Fig. 11). After the filtration was complete the remaining solid was rinsed with additional CHCl₃ (or until the undissolved solid is pale colored) and the washings were filtered into the receiving flask. The solvent was removed from the filtrate and the resulting bright red solid, 101 g (>95% of theoretical recovery), was stored in the drybox (for NMR, see Fig. 12).

### MAO Treatment of Silica

500 g of silica (Fuji-Davison - Chromatography Grade) was dried at 200°C in vacuo for two hours (Figure 1). Water content of the silica was determined by heating a sample of the dried silica to 300°C and calculating the percent loss of weight (approximately 0.5-1.08. Toluene (1.5 L) was added and the slurry stirred at room temperature. 1500 mL of a solution of 30% by weight of MAO in toluene was then added to the silica slurry. The slurry was then heated to reflux for 4 hours. After cooling to room temperature, the supernatant was decanted by cannula and the solid washed four times each with 500 mL portions of toluene. The solid was then dried in vacuo overnight at 80°C.

### Supporting of Metallocene on MAO-Treated Silica

A toluene solution of metallocene [diphenylmethyl cyclopentadienyl-9-fluorenylzirconium dichloride, abbreviated Ph₂C(Flu-Cp)ZrCl₂ - 16 g] was added via cannula to a stirred slurry of MAO/SiO₂ from the previous procedure (approximately 800 grams) in 2 L toluene. Upon contact with the MAO/SiO₂, the red metallocene turns the solid deep purple. The slurry was stirred for one hour at room temperature. The supernatant liquid was decanted and the solid washed three times each with 500 mL hexane. The purple solid was then dried overnight in vacuo at room temperature.

The following Examples and Comparative Examples illustrate the present invention in more detail and the advantages to be gained in increased catalyst efficiency by introducing a pre-polymerized catalyst into a reaction zone.

### EXAMPLE I

A slurry of 180 mg solid catalyst component and 540 mg of triisobutylaluminum (TIBAl) was prepared in 5.0 ml mineral oil. A one ml aliquot was added to a 2.0 liter autoclave from which the air had been sufficiently replaced by nitrogen. The autoclave was then charged with 1.4 liters of liquid propylene and 16 mmoles of gaseous hydrogen. The mixture was then heated to 60°C and maintained for 60 minutes. The polymer was then dried at 80°C. Polymerization results are shown in Table 1.

| Polymerization | |
|---|---|
| Reagents | Conditions |
| Catalyst: 36 mg | Temperature: 60°C |
| TIBAl: 108 mg | Time: 1 hour |
| Propylene: 1.4 L (0.72 kg) | |
| Hydrogen: 16 mmol | |

### EXAMPLE II

Approximately 16 mmoles of hydrogen were added to an empty (under ∼ 2 psig nitrogen) and dry 2 L Zipperclave reactor followed by 1.0 L of propylene. The reactor was heated to 60°C and stirred at approximately 1000 rpm.
A slurry of 180 mg solid catalyst component was prepared and mixed with 540 mg of triisobutylaluminum (TIBAl) in 5.0 ml mineral oil. A one ml aliquot was precontacted with a small amount of propylene at room temperature for five seconds. The catalyst was then charged into the reactor.

Polymerization continued for one hour during which time the reactor was maintained at the polymerization temperature. At the end of this time polymerization was terminated by rapidly venting the reactor of unreacted monomer. The polymer yield and analysis is shown in Table I.

### EXAMPLE III

Approximately 16 mmoles of hydrogen (oP = 120 psig from a 48.7 Ml bomb) were added to an empty (under ∼ 2 psig nitrogen) and dry 2 L Zipperclave reactor followed by 1.0 L of propylene. The reactor was heated to 60°C and stirred at approximately 1000 rpm. A slurry of 108 mg solid catalyst component and 45 mg of triisobutylaluminum (TIBAl) in 5.0 ml mineral oil were prepared and aged for one day. One ml of the mineral oil slurry was precontacted with 99 mg of TIBAl. The catalyst was then charged into the reactor.

Polymerization continued for one hour during which time the reactor was maintained at the polymerization temperature. At the end of this time polymerization was terminated by rapidly venting the reactor of unreacted monomer. The polymer yield and analysis is shown in Table I.

### EXAMPLE IV

The same procedure of Example III was used except 60 mg of TIBAl was used for aging. The polymer yield and analysis is shown in Table I.

### EXAMPLE V

Approximately 16 moles of hydrogen (oP = 120 psig from a 48.7 Ml bomb) were added to an empty (under ∼ 2 psig nitrogen) and dry 2 L Zipperclave reactor followed by 1.0 L of propylene. The reactor was heated to 60°C and stirred at approximately 1000 rpm.

A slurry of 108 mg solid catalyst component and 45 mg of triisobutylaluminum (TIBAl) in 5.0 ml mineral oil was prepared and aged for two days. A one ml aliquot of the mineral oil slurry was mixed with 99 mg of TIBAl. The mineral oil/TIBAl mixture was precontacted with a small amount of propylene for 5 seconds. The catalyst was then charged into the reactor.

Polymerization continued for one hour during which time the reactor was maintained at the polymerization temperature. At the end of this time polymerization was terminated by rapidly venting the reactor of unreacted monomer. The polymer yield and analysis is shown in Table I.

### EXAMPLE VI

The same procedure of Example V was used except 60 mg of TIBAl was used for aging.

### EXAMPLE VII

The same procedure of Example V was used except the precontact time was 10 seconds.

### EXAMPLE VIII

The same procedure of Example V was used except 60 mg of TIBAl was used for aging and the precontact time was 10 seconds.

### EXAMPLE IX

The same procedure of Example III was used except 135 mg of TIBAl was used.

### EXAMPLE X

The same procedure of Example III was used except 180 mg of TIBAl was used.

### EXAMPLE XI

The same procedure of Example V was used except 135 mg of TIBAl was used for aging and the aging was one day.

### EXAMPLE XII

The same procedure of Example V was used except 180 mg of TIBAl was used for aging and the aging was one day.

### EXAMPLE XIII

The same procedure of Example V was used except 135 mg of TIBAL was used for aging, the aging was one day and the precontact time was 10 seconds.

### EXAMPLE XIV

The same procedure of Example V was used except 180 mg of TIBAl was used for aging, the aging was one day and the precontact time was 10 seconds.

**TABLE I**

| Example # | TIBAL mg | Aging (days) | Prepoly (sec) | Yield (g) | Efficiency (g sPP/g cat) | Bulk Density (g/cc) | Melt flow (g/10 min) | Morphology |
|---|---|---|---|---|---|---|---|---|
| 1. | 0 | - | 0 | 125 | 3472 | 0.32 | 0.56 | Agglomerate |
| 2. | 0 | - | 5 | 127 | 3528 | 0.32 | 0.56 | Agglomerate |
| 3. | 45 | 1 | 0 | 146 | 4056 | | 0.56 | Agglomerate |
| 4. | 60 | 1 | 0 | 130 | 3611 | | - | Agglomerate |
| 5. | 45 | 2 | 5 | 132 | 3667 | | 0.60 | Agglomerate |
| 6. | 60 | 2 | 5 | 126 | 3500 | | 0.68 | Agglomerate |
| 7. | 45 | 2 | 10 | 128 | 3556 | 0.32 | 0.72 | Granules |
| 8. | 60 | 2 | 10 | 108 | 3000 | 0.31 | 0.70 | Granules |
| 9. | 135 | 1 | 0 | 145 | 4028 | 0.35 | 0.58 | Agglomerate |
| 10. | 180 | 1 | 0 | 146 | 4056 | | 0.66 | Agglomerate |
| 11. | 135 | 1 | 5 | 145 | 4028 | 0.34 | 0.70 | Agglomerate |
| 12. | 180 | 1 | 5 | 128 | 3556 | 0.32 | 0.62 | Granules & Agglomerate |
| 13. | 135 | 1 | 10 | 192 | 5333 | 0.32 | 0.68 | Granules |
| 14. | 180 | 1 | 10 | 225 | 6250 | 0.35 | - | Granules |

Polymer morphology is related to the prepolymerization time. The desired polymer morphology was obtained with a prepolymerization of at least 10 seconds. Polymer morphology is related to the amount of aluminum alkyl used in aging the catalyst. The desired polymer morphology was obtained with a catalyst aged in an aluminum alkyl to catalyst weight ratio of approximately 1:1 when triisobutyl aluminum was used as the aluminum alkyl.

Catalyst efficiency is related to activation of the catalyst with aluminum alkyl. Catalyst efficiency improved when the catalyst was aged in aluminum alkyl. In addition, catalyst efficiency is related to prepolymerization. Catalyst efficiency improved when the catalyst was prepolymerized at least 10 seconds, especially when the catalyst was aged in an aluminum alkyl to catalyst weight ratio of approximately 1:1 when triisobutyl aluminum was used as the aluminum alkyl.

The drawing is a schematic illustration showing the prepolymerization system of the present invention set up for the supply of prepolymerized catalyst to a continuous flow-type polypropylene reactor. The continuous flow reactor 2 normally will take the form of a loop 4 equipped with an impeller 5. As will be understood by those skilled in the art the impeller 5 functions to circulate the polymerization reaction mass continuously through the loop at controlled temperature and pressure conditions. The polymer product is withdrawn from the reactor via line 6.

A carrier stream for the prepolymerization reactor is initially established by the supply of a suitable solvent for the catalyst to a mixing line 8. The organic solvent, such as mineral oil, is supplied to the mixing line via line 9. TIBAl supplied to the carrier fluid from suitable sources (not shown) via lines 11 and 12, respectively. After addition of the co-catalyst, the catalyst is supplied to the carrier fluid via line 14. The catalyst may be supplied by any suitable procedure, either continuously or intermittently. The carrier fluid containing the catalyst components is then supplied to a tubular reactor 16 where it is mixed with liquid propylene supplied, for example, by a secondary line 18 leading from a main propylene supply line 19. The amount of propylene supplied to the prepolymerization reactor 16 is relatively small in comparison to the amount of propylene supplied via the main supply line 19 to the polymerization reactor 2. The propylene supplied to the prepolymerization reactor 16 and also the main reactor 2 normally will have small amounts of hydrogen entrained therein.

As noted previously, because of the perceived slow reaction time of the prepolymerization reaction, the residence times of the propylene and catalyst components in prior art prepolymerization reactors are normally on the order of minutes or even hours. Also the capacity of the prepolymerization reactor in a commercial unit is fairly substantial, normally on the order of 200 liters or more. In the present invention, the residence time of the reaction mixture within the prepolymerization reactor 16 is less than a minute and, as practical matter on the order of several seconds, and the volume capacity of the prepolymerization reactor will be quite small, normally less than 1 liter. For most applications of the invention, the residence time within the prepolymerization reactor is approximately three seconds. The temperature of the tubular reactor is less than the polymerization temperature but sufficient to prepolymerize the catalyst and is preferably no greater than 30°C.

The drawing illustrates the preferred order of addition of the catalyst components to the carrier stream. That is, it is desirable that the catalyst which already contains the co-catalyst be added to the carrier stream.

In a specific embodiment of the invention, the catalyst component is supplied to an elongated tubular prepolymerization reactor of extremely low capacity which is operated at a residence time of approximately three seconds.

In this embodiment, reaction chamber 16 is defined by a 50-200 feet long tubing having an internal diameter of 3/8 inch and is preferably 100 feet. The flow rate is adjusted to provide for a residence time within the tubing of approximately three seconds.

Obviously, numerous modifications and variations of the present invention are possible in light of the above teachings. It is therefore to be understood that within the scope of the appended claims, the invention may be practiced otherwise than as specifically described herein.

## Claims

1. A process for activating a metallocene comprising the steps of:
a) supporting the metallocene on a solid treated with alumoxane comprising:
- forming a solution of a metallocene of the general formula
R"_{b}(CpR_{5-b})(CpR'_{5-b})MR*ᵥ₋₂
where R" is a bridge imparting stereorigidity to the structure to the metallocene by connecting the two cyclopentadienyl rings, b is 1 or 0 indicating whether the bridge is present or not, Cp is a cyclopentadienyl ring, R and R' are substituents on the cyclopentadienyl rings and can be a hydride or a hydrocarbyl from 1-9 carbon atoms, each R and R' being the same or different, each (CpR_{5-b}) and (CpR'_{5-b}) being different and bilateral symmetry exists for (CpR_{5-b}) and for (CpR'_{5-b}), M is a Group IIIB, IVB, VB or VIB metal, R* is a hydride, a halogen or a hydrocarbyl from 1-20 carbon atoms, v is the valence of M in a nonpolar solvent;
- forming a slurry of silica treated with alumoxane in a nonpolar solvent;
- adding the two slurries together at room temperature;
- stirring the resulting slurry;
- separating the solid;
- drying the solid.
b) forming a suspension of the metallocene catalyst of step a) supported on silica treated with alumoxane in an inert liquid carrier;
c) adding an organoaluminum; and
d) aging the mixture of the metallocene catalyst supported on silica treated with alumoxane and the organoaluminum for 1 to 720 hours.

2. A process as in Claim 1 wherein the bridge is a hydrocarbyl biradical having 1-20 carbon atoms.

3. A process as in Claim 1 wherein the bridge is a single substituted carbon atom.

4. A process as in Claim 1 wherein the bridge is a linear alkyl radical of 1-10 carbon atoms or branched alkyl radical of 1-20 carbon atoms.

5. A process as in Claim 1 wherein the bridge is diphenylmethyl.

6. A process as in Claim 1 wherein (CpR_{5-b}) is unsubstituted cyclopentadienyl.

7. A process as in Claim 1 wherein (CpR'_{5-b}) is fluorenyl.

8. A process as in Claim 1 wherein Me is a Group IVB metal.

9. A process as in Claim 1 wherein Me is zirconium.

10. A process as in Claim 1 wherein the metallocene is diphenylmethyl(cyclopentadienyl-9-fluorenyl)zirconium dichloride.

11. A process as in Claim 1 wherein the nonpolar solvent is toluene.

12. The process as in Claim 1 wherein the organoaluminum is an alkyl aluminum of the general formula AlR'₃ where R' is an alkyl of from 1-8 carbon atoms or a halogen and R' may be the same or different with at least one R' being an alkyl.

13. The process as in Claim 12 wherein the organoaluminum is a trialkyl aluminum, a dialkylaluminum halide, or an alkylaluminum dihalide.

14. The process as in Claim 13 wherein the organoaluminum is trimethyl aluminum, triethyl aluminum, triisobutyl aluminum or diethyl aluminum chloride.

15. The process as in Claim 14 wherein the organoaluminum is triisobutyl aluminum.

16. A process for polymerization of olefins comprising :
(a) contacting a supported and activated metallocene catalyst according to any one of claims 1 to 15
(b) introducing said catalyst into a polymerization reaction zone containing an olefin monomer.

17. The process of Claim 16 wherein the catalyst is pre-polymerized by contacting the catalyst with a monomer prior to the polymerization reaction zone.

18. The process of Claim 16 wherein the contact of the catalyst with the organoaluminum compound is 18 to 48 hours.

19. The process of Claim 16 wherein the contact of the catalyst with the organoaluminum compound is 12 to 24 hours.

20. The process of Claim 16 wherein the pre-polymerized catalyst is coated such that the weight ratio of polymer to catalyst is approximately 0.01-3.0.

21. The process of Claim 20 wherein the weight ratio of polymer to catalyst is greater than 1.0.

22. The process of Claim 21 wherein the weight of polymer to catalyst is approximately 2.0-3.0.

23. The process of Claim 16 wherein the catalyst is suspended in an inert liquid carrier.

24. The process of Claim 23 wherein said inert liquid carrier is mineral oil.

25. The process of Claim 16 wherein the pre-polymerizing is a minimum of three seconds.

26. A process for supplying a catalyst to an olefin polymerization reactor comprising:
(a) Aging for 1 hour to 720 hours in a trialkylaluminum a supported metallocene catalyst of the general formula:
R"_{b}(CpR_{5-b})CpR'_{5-b})MR*ᵥ₋₂
where R" is a bridge imparting stereorigidity to the structure to the metallocene by connecting the two cyclopentadienyl rings, b is 1 or 0 indicating whether the bridge is present or not, Cp is a cyclopentadienyl ring, R and R' are substituents on the cyclopentadienyl rings and can be a hydride or a hydrocarbyl from 1-9 carbon atoms, each R and R' being the same or different, each (CpR_{5-b}) and (CpR'_{5-b}) being different so that bilateral symmetry exists for (CpR_{5-b}) and for (CpR'_{5-b}), M is a Group IIIB, IVB, VB or VIB metal, R* is a hydride, a halogen or a hydrocarbyl from 1-20 carbon atoms, v is the valence of M;
(b) establishing a fluid carrier stream containing the supported metallocene catalysts;
(c) adding olefin monomer to the carrier stream containing the catalyst;
(d) flowing the carrier stream containing the olefin monomer and the catalyst through an elongated tubular reactor at a flow rate sufficient to provide a residence time in said tubular reactor of approximately three seconds under temperature conditions to prepolymerize the catalyst with the monomer according to any one of claims 17, 20, 21 and 22, within said tubular reactor without plugging of the tubular reactor; and
(e) passing the carrier stream containing the prepolymerized catalyst into a polymerization reactor.

27. The process of Claim 26 wherein the volume capacity of the tubular reactor is less than 1 liter.

28. The process of Claim 26 wherein the tubular reactor is 15.24-60.96m (50-200 feet) long with an intemal diameter of 0.925cm (3/8 inch).

29. The process of Claim 28 wherein the tubular reactor is 30.48m (100 feet) long.

30. The process of Claim 26 wherein the tubular reactor is operated at a temperature of 30°C.

31. A process of polymerization of olefins comprising:
(a) establishing a fluid carrier stream;
(b) adding a supported metallocene catalyst of the general formula:
R"_{b}(CpR_{5-b})CpR'_{5-b})MR*ᵥ₋₂
where R" is a bridge imparting stereorigidity to the structure to the metallocene by connecting the two cyclopentadienyl rings, b is 1 or 0 indicating whether the bridge is present or not, Cp is a cyclopentadienyl ring, R and R' are substituents on the cyclopentadienyl rings and can be a hydride or a hydrocarbyl from 1-9 carbon atoms, each R and R' being the same or different, each (CpR_{5-b}) and (CpR'_{5-b}) being different so that bilateral symmetry exists for (CpR_{5-b}) and for (CpR'_{5-b}), M is a Group IIIB, IVB, VB or VIB metal, R* is a hydride, a halogen or a hydrocarbyl from 1-20 carbon atoms, v is the valence of M,
wherein the catalyst has been aged with an organoaluminum compound for 1 to 720 hours;
(c) allowing the aged catalyst to contact a co-catalyst and an olefin to prepolymerize the catalyst according to any one of claims 17, 20, 21, 22 and 31; and
(d) introducing the carrier stream containing the prepolymerized catalyst into a polymerization reaction zone containing the olefin monomer.

32. The process of any one of claims 16 to 31 wherein the olefin monomer is propylene.

## Patentansprüche

1. Verfahren zum Aktivieren eines Metallocens, umfassend die Stufen von:
a) Unterstützen des Metallocens auf einem Feststoffträger, behandelt mit Alumoxan, umfassend:
- Bilden einer Lösung eines Metallocens der allgemeinen Formel
R"_{b}(CpR_{5-b})(CpR'_{5-b})MR*ᵥ₋₂
wobei R" eine Brücke ist, die der Struktur von dem Metallocen Stereorigidität verleiht, durch Verbinden der zwei Cyclopendadienylringe, b ist 1 oder 0, angebend, ob die Brücke vorhanden oder nicht vorhanden ist, Cp ist ein Cyclopentadienylring, R und R' sind Substituenten auf den Cyclopentadienylringen und können ein Hydrid oder ein Hydrocarbyl mit 1 bis 9 Kohlenstoffatomen sein, jedes R und R' sind gleich oder unterschiedlich, jedes (CpR_{5-b}) und (CpR'_{5-b}) ist verschieden, und bilaterale Symmetrie besteht für (CpR_{5-b}) und für (CpR'_{5-b}), M ist ein Gruppe IIIB, IVB, VB oder VIB Metall, R* ist ein Hydrid, ein Halogen oder ein Hydrocarbyl mit 1-20 Kohlenstoffatomen, v ist die Valenz von M in einem nicht polaren Lösungsmittel,
- Bilden einer Aufschlämmung von Silica, behandelt mit Alumoxan, in einem nicht polaren Lösungsmittel,
- Hinzugeben der zwei Aufschlämmungen zusammen bei Raumtemperatur,
- Rühren der sich ergebenden Aufschlämmung,
- Abtrennen des Feststoffes,
- Trocknen des Feststoffes,
b) Bilden einer Suspension des Metallocenkatalysators von Stufe a), getragen auf Silica, behandelt mit Alumoxan, in einem inerten flüssigen Träger,
c) Hinzugeben eines Organoaluminiums und
d) Altern der Mischung des Metallocenkatalysators, getragen auf Silica, behandelt mit Alumoxan, und dem Organoaluminium 1 bis 720 Stunden.

2. Verfahren nach Anspruch 1, wobei die Brücke ein Hydrocarbylbirest mit 1-20 Kohlenstoffatomen ist.

3. Verfahren nach Anspruch 1, wobei die Brücke ein einzelnes substituiertes Kohlenstoffatom ist.

4. Verfahren nach Anspruch 1, wobei die Brücke ein linearer Alkylrest mit 1-10 Kohlenstoffatomen oder verzweigter Alkylrest mit 1-20 Kohlenstoffatomen ist.

5. Verfahren nach Anspruch 1, wobei die Brücke Diphenylmethyl ist.

6. Verfahren nach Anspruch 1, wobei (CpR_{5-b}) unsubstituiertes Cyclopentadienyl ist.

7. Verfahren nach Anspruch 1, wobei (CpR'_{5-b}) Fluorenyl ist.

8. Verfahren nach Anspruch 1, wobei Me ein Gruppe IVB Metall ist.

9. Verfahren nach Anspruch 1, wobei Me Zirconium ist.

10. Verfahren nach Anspruch 1, wobei das Metallocen Diphenylmethyl(cyclopentadienyl-9-fluorenyl)zirconiumdichlorid ist.

11. Verfahren nach Anspruch 1, wobei das nicht polare Lösungsmittel Toluol ist.

12. Verfahren nach Anspruch 1, wobei das Organoaluminium ein Alkylaluminium der allgemeinen Formel AlR'₃ ist, wobei R' ein Alkyl mit 1-8 Kohlenstoffatomen oder eine Halogen ist, und R' kann das gleiche oder unterschiedlich sein, wobei mindestens ein R' ein Alkyl ist. das

13. Verfahren nach Anspruch 12, wobei das Organoaluminium ein Trialkylaluminium, ein Dial kylaluminiumhalogenid oder ein Alkylaluminiumdihalogenid ist.

14. Verfahren nach Anspruch 13, wobei das Organoaluminium Trimethylaluminium, Triethylaluminium, Triisobutylaluminium oder Diethylaluminiumchlorid ist.

15. Verfahren nach Anspruch 14, wobei das Organoaluminium Triisobutylaluminium ist.

16. Verfahren zum Polymerisieren von Olefinen, umfassend:
(a) in Kontakt bringen eines unterstützten und aktivierten Metallocenkatalysators nach einem von Ansprüchen 1 bis 15,
(b) Einführen des Katalysators in eine Polymerisationsreaktionszone, enthaltend ein Olefinmonomer.

17. Verfahren nach Anspruch 16, wobei der Katalysator vorpolymerisiert wird durch in Kontakt bringen des Katalysators mit einem Monomeren vor der Polymerisationsreaktionszone.

18. Verfahren nach Anspruch 16, wobei der Kontakt des Katalysators mit der Organoaluminiumverbindung 18 bis 48 Stunden ist.

19. Verfahren nach Anspruch 16, wobei der Kontakt des Katalysators mit der Organoaluminiumverbindung 12 bis 24 Stunden ist.

20. Verfahren nach Anspruch 16, wobei der vorpolymerisierte Katalysator derartig überzogen wird, daß das Gewichtsverhältnis von Polymer zu Katalysator annähernd 0,01-3,0 ist.

21. Verfahren nach Anspruch 20, wobei das Gewichtsverhältnis von Polymer zu Katalysator größer als 1, 0 ist.

22. Verfahren nach Anspruch 21, wobei das Gewicht von Polymer zu Katalysator annähernd 2,0-3,0 ist.

23. Verfahren nach Anspruch 16, wobei der Katalysator in einem inerten füssigen Träger suspendiert wird.

24. Verfahren nach Anspuch 23, wobei der inerte flüssige Träger Mineralöl ist.

25. Verfahren nach Anspruch 16, wobei das Vorpolymerisieren ein Minimum von drei Sekunden ist.

26. Verfahren zum Liefern eines Katalysators zu einem Olefinpolymerisationsreaktor, umfassend:
(a) Altern 1 Stunde bis 720 Stunden in einem Trialkylaluminium einen unterstützten Metallocenkatalysator der allgemeinen Formel
R"_{b}(CpR_{5-b})CpP'_{5-b})MR*ᵥ₋₂
wobei R" eine Brücke ist, die Stereorigidität der Struktur dem Metallocen verleiht, durch Verbinden der zwei Cyclopentadienylringe, b ist 1 oder 0, angebend, ob die Brücke vorhanden oder nicht vorhanden ist, Cp ist ein Cyclopentadienylring, R und R' sind Substituenten auf den Cyclopentadienylringen und können ein Hydrid oder ein Hydrocarbyl mit 1-9 Kolenstoffatomen sein, jedes R und R' sind gleich oder unterschiedlich, jedes (CpR_{5-b}) und (CpR'_{5-b}) sind verschieden, so daß bilaterale Symmetrie für (CpR_{5-b}) und für (CpR'_{5-b}) besteht, M ist ein Gruppe IIIB, IVB, VB oder VIB Metall, R* ist ein Hydrid, ein Halogen oder ein Hydrocarbyl mit 1-20 Kohlenstoffatomen, v ist die Valenz von M,
(b) Begründen eines Fluidumträgerstromes, enthaltend die unterstützten Metallocenkatalysatoren,
(c) Hinzufügen von Olefinmonomer zu dem Trägerstrom, enthaltend den Katalysator,
(d) Fließenlassen des Trägerstromes, enthaltend das Olefinmonomer und den Katalysator, durch einen länglichen röhrenförmigen Reaktor mit einer Flußrate, ausreichend, eine Verweilzeit in dem röhrenförmigen Reaktor von annähernd drei Sekunden unter Temperaturbedingungen zur Verfügung zu stellen, zum Vorpolymerisieren des Katalysators mit dem Monomeren nach einem von Ansprüchen 17, 20, 21 und 22 innerhalb des röhrenförmigen Reaktors ohne Verstopfen des röhrenförmigen Reaktors, und
(e) Fließenlassen des Trägerstromes, enthaltend den vorpolymerisierten Katalysator, in einen Polymerisationsreaktor.

27. Verfahren nach Anspruch 26, wobei die Volumenkapazität des röhrenförmigen Reaktors geringer als 1 Liter ist.

28. Verfahren nach Anspruch 26, wobei der röhrenförmige Reaktor 15,24-60,96 m (50-200 Fuß) lang mit einem Innendurchmesser von 0,925 cm (3/8 Zoll) ist.

29. Verfahren nach Anspruch 28, wobei der röhrenförmige Reaktor 30,48 m (100 Fuß) lang ist.

30. Verfahren nach Anspruch 26, wobei der röhrenförmige Reaktor bei einer Temperatur von 30°C betrieben wird.

31. Polymerisationsverfahren von Olefinen, umfassend:
(a) Begründen eines Fluidumträgerstromes,
(b) Hinzufügen eines unterstützten Metallocenkatalysators der allgemeinen Formel:
R"_{b}(CpR_{5-b})CpR'_{5-b})MR*ᵥ₋₂
wobei R" eine Brücke ist, die Stereorigidität der Struktur dem Metallocen verleiht durch Verbinden der zwei Cyclopentadienylringe, b ist 1 oder 0, angebend, ob die Brücke vorhanden oder nicht vorhanden ist, Cp ist ein Cyclopentadienylring, R und R' sind Substituenten auf den Cyclopentadienylringen und können ein Hydrid oder Hydrocarbyl mit 1-9 Kohlenstoffatomen sein, jedes R und R' sind gleich oder unterschiedlich, jedes (CpR_{5-b}) und (CpR'_{5-b}) sind verschieden, so daß bilaterale Symmetrie für (CpR_{5-b}) und für (CpR'_{5-b}) besteht, M ist ein Gruppe IIIB, IVB, VB oder VIB Metall, R* ist ein Hydrid, ein Halogen oder ein Hydrocarbyl mit 1-20 Kohlenstoffatomen, v ist die Valenz von M,
wobei der Katalysator mit einer Organoaluminiumverbindung 1 bis 720 Stunden gealtert worden ist,
(c) Ermöglichen, daß der gealterte Katalysator mit einem Cokatalysator und einem Olefin in Kontakt tritt unter Vorpolymerisieren des Katalysators nach einem von Ansprüchen 17, 20, 21, 22 und 31, und
(d) Einführen des Trägerstromes, enthaltend den vorpolymerisierten Katalysator, in eine Polymerisationsreaktionszone, enthaltend das Olefinmonomer.

32. Verfahren nach einem von Ansprüchen 16 bis 31, wobei das Olefinmonomer Propylen ist.

## Revendications

1. Procédé pour activer un métallocène, comprenant les étapes consistant à :
a) déposer le métallocène sur un support solide traité avec de l'alumoxane, ledit traitement comprenant le fait de :
- former une solution d'un métallocène répondant à la formule générale
**R"**_{**b**}**(CpR**_{**5-b**}**)(CpR'**_{**5-b**}**)MR***_{**v-2**}
dans laquelle R" représente un pont conférant une stéréorigidité à la structure du métallocène en reliant les deux noyaux cyclopentadiényle, b est égal à 1 ou 0 pour indiquer le fait de savoir si le pont est présent ou non, Cp représente un noyau cyclopentadiényle, R et R' représentent des substituants sur les noyaux cyclopentadiényle, lesdits substituants pouvant représenter un hydrure ou un groupe hydrocarbyle contenant de 1 à 9 atomes de carbone, chaque radical R et R' étant identique ou différent, chaque groupe (CpR_{5-b}) et (CpR'_{5-b}) étant différent et une symétrie bilatérale existant pour (CpR_{5-b}) et pour (CpR'_{5-b}), M représente un métal du groupe IIIB, IVB, VB ou VIB, R* représente un hydrure, un atome d'halogène ou un groupe hydrocarbyle contenant de 1 à 20 atomes de carbone, v représente la valence de M dans un solvant apolaire ;
- former une pâte à partir de la silice traitée avec de l'alumoxane dans un solvant apolaire ;
- ajouter les deux pâtes l'une à l'autre à la température ambiante ;
- agiter la pâte résultante ;
- séparer le produit solide ;
- sécher le produit solide ;
b) former une suspension du catalyseur de métallocène de l'étape a) déposé sur un support de silice traitée avec un alumoxane dans un support liquide inerte ;
c) ajouter un organoaluminium ; et
d) soumettre à un vieillissement le mélange du catalyseur de métallocène déposé sur un support de silice traitée avec de l'alumoxane et de l'organoaluminium pendant un laps de temps de 1 à 720 heures.

2. Procédé selon la revendication 1, dans lequel le pont est un biradical d'hydrocarbyle contenant de 1 à 20 atomes de carbone.

3. Procédé selon la revendication 1, dans lequel le pont représente un atome de carbone unique substitué.

4. Procédé selon la revendication 1, dans lequel le pont est un radical alkyle linéaire contenant de 1 à 10 atomes de carbone ou un radical alkyle ramifié contenant de 1 à 20 atomes de carbone.

5. Procédé selon la revendication 1, dans lequel le pont est un radical diphénylméthyle.

6. Procédé selon la revendication 1, dans lequel le groupe (CpR_{5-b}) représente un groupe cyclopentadiényle non substitué.

7. Procédé selon la revendication 1, dans lequel le groupe (CpR'_{5-b}) représente un groupe fluorényle.

8. Procédé selon la revendication 1, dans lequel Me représente un métal du groupe IVB.

9. Procédé selon la revendication 1, dans lequel Me représente le zirconium.

10. Procédé selon la revendication 1, dans lequel le métallocène est le dichlorure de diphénylméthyl-(cyclopentadiényl-9-fluorényl)zirconium.

11. Procédé selon la revendication 1, dans lequel le solvant apolaire est le toluène.

12. Procédé selon la revendication 1, dans lequel l'organoaluminium est un alkylaluminium répondant à la forme générale AlR'₃ où R' représente un groupe alkyle contenant de 1 à 8 atomes de carbone ou encore un atome d'halogène et les radicaux R' peuvent être identiques ou différents, au moins un radical R' représentant un groupe alkyle.

13. Procédé selon la revendication 12, dans lequel l'organoaluminium est un trialkylaluminium, un halogénure de dialkylaluminium ou encore un dihalogénure d'alkylaluminium.

14. Procédé selon la revendication 13, dans lequel l'organoaluminium est le triméthylaluminium, le triéthylaluminium, le triisobutylaluminium ou encore le chlorure de diéthylaluminium.

15. Procédé selon la revendication 14, dans lequel l'organoaluminium est le triisobutylaluminium.

16. Procédé pour la polymérisation d'oléfines, comprenant le fait de :
(a) mettre un catalyseur de métallocène déposé sur un support en contact avec un catalyseur de métallocène activé selon l'une quelconque des revendications 1 à 15 ;
(b) introduire ledit catalyseur dans une zone de réaction de polymérisation contenant un monomère d'oléfine.

17. Procédé selon la revendication 16, dans lequel le catalyseur est soumis à une prépolymérisation par la mise en contact du catalyseur avec un monomère avant de l'introduire dans la zone de réaction de polymérisation.

18. Procédé selon la revendication 16, dans lequel le temps de mise en contact du catalyseur avec le composé d'organoaluminium s'élève de 18 à 48 heures.

19. Procédé selon la revendication 16, dans lequel le temps de mise en contact du catalyseur avec le composé d'organoaluminium s'élève de 12 à 24 heures.

20. Procédé selon la revendication 16, dans lequel le catalyseur soumis à une prépolymérisation est muni d'un revêtement de telle sorte que le rapport pondéral du polymère au catalyseur s'élève approximativement de 0,01 à 3,0.

21. Procédé selon la revendication 20, dans lequel le rapport pondéral du polymère au catalyseur est supérieur à 1,0.

22. Procédé selon la revendication 21, dans lequel le rapport pondéral du polymère au catalyseur s'élève approximativement de 2,0 à 3,0.

23. Procédé selon la revendication 16, dans lequel le catalyseur est mis en suspension dans un support liquide inerte.

24. Procédé selon la revendication 23, dans lequel ledit support liquide inerte est de l'huile minérale.

25. Procédé selon la revendication 16, dans lequel la prépolymérisation s'effectue en un minimum de trois secondes.

26. Procédé pour alimenter un réacteur de polymérisation d'oléfine avec un catalyseur, comprenant le fait de :
(a) soumettre à un vieillissement pendant un laps de temps de 1 heure à 720 heures dans un trialkylaluminium, un catalyseur de métallocène déposé sur un support, répondant à la formule générale :
**R"**_{**b**}**(CpR**_{**5-b**}**)(CpR'**_{**5-b**}**)MR***_{**v-2**}
dans laquelle R" représente un pont conférant une stéréorigidité à la structure du métallocène en reliant les deux noyaux cyclopentadiényle, b est égal à 1 ou 0 pour indiquer le fait de savoir si le pont est présent ou non, Cp représente un noyau cyclopentadiényle, R et R' représentent des substituants sur les noyaux cyclopentadiényle, lesdits substituants pouvant représenter un hydrure ou un groupe hydrocarbyle contenant de 1 à 9 atomes de carbone, chaque radical R et R' étant identique ou différent, chaque groupe (CpR_{5-b}) et (CpR'_{5-b}) étant différent et une symétrie bilatérale existant pour (CpR_{5-b}) et pour (CpR'_{5-b}), M représente un métal du groupe IIIB, IVB, VB ou VIB, R* représente un hydrure, un atome d'halogène ou un groupe hydrocarbyle contenant de 1 à 20 atomes de carbone, v représente la valence de M dans un solvant apolaire ;
(b) établir un courant de transport de fluide contenant le catalyseur de métallocène déposé sur un support ;
(c) ajouter un monomère d'oléfine au courant de transport contenant le catalyseur ;
(d) faire en sorte que le courant de transport contenant le monomère d'oléfine et le catalyseur s'écoule à travers un réacteur tubulaire allongé à un débit d'écoulement suffisant pour obtenir un temps de séjour dans ledit réacteur tubulaire d'approximativement trois secondes dans des conditions de température qui permettent de prépolymériser le catalyseur avec le monomère conformément à l'une quelconque des revendications 17, 20, 21 et 22, à l'intérieur dudit réacteur tubulaire, sans donner lieu à une obturation du réacteur tubulaire ; et
(e) faire passer dans un réacteur de polymérisation le courant de transport contenant le catalyseur à l'état prépolymérisé.

27. Procédé selon la revendication 26, dans lequel la capacité volumique du réacteur tubulaire est inférieure à 1 litre.

28. Procédé selon la revendication 26, dans lequel le réacteur tubulaire possède une longueur de 15,24 à 60,96 mètres (de 50 à 200 pieds) avec un diamètre interne de 0,925 cm (3/8 de pouce).

29. Procédé selon la revendication 28, dans lequel le réacteur tubulaire possède une longueur de 30,48 mètres (100 pieds).

30. Procédé selon la revendication 26, dans lequel le réacteur tubulaire est mis en service à une température de 30 °C.

31. Procédé de polymérisation d'oléfines comprenant le fait de :
(a) établir un courant de transport de fluide ;
(b) ajouter un catalyseur de métallocène déposé sur un support répondant à la formule générale
**R"**_{**b**}**(CpR**_{**5-b**}**)(CpR'**_{**5-b**}**)MR***_{**v-2**}
dans laquelle R" représente un pont conférant une stéréorigidité à la structure du métallocène en reliant les deux noyaux cyclopentadiényle, b est égal à 1 ou 0 pour indiquer le fait de savoir si le pont est présent ou non, Cp représente un noyau cyclopentadiényle, R et R' représentent des substituants sur les noyaux cyclopentadiényle, lesdits substituants pouvant représenter un hydrure ou un groupe hydrocarbyle contenant de 1 à 9 atomes de carbone, chaque radical R et R' étant identique ou différent, chaque groupe (CpR_{5-b}) et (CpR'_{5-b}) étant différent et une symétrie bilatérale existant pour (CpR_{5-b}) et pour (CpR'_{5-b}), M représente un métal du groupe IIIB, IVB, VB ou VIB, R* représente un hydrure, un atome d'halogène ou un groupe hydrocarbyle contenant de 1 à 20 atomes de carbone, v représente la valence de M dans un solvant apolaire ;
dans lequel le catalyseur a été soumis à un vieillissement avec un composé d'organoaluminium pendant un laps de temps de 1 à 720 heures ;
(c) laisser le catalyseur soumis à un vieillissement entrer en contact avec un cocatalyseur et une oléfine dans le but de soumettre le catalyseur à une prépolymérisation conformément à l'une quelconque des revendications 17, 20, 21, 22 et 31 ; et
(d) introduire le courant de transport contenant le catalyseur soumis à une prépolymérisation dans une zone de réaction de polymérisation contenant le monomère d'oléfine.

32. Procédé selon une quelconque des revendications 16 à 31, dans lequel le monomère d'oléfine est du propylène.
